# EUROPEAN PATENT APPLICATION

(11) **EP 1 646 002 A1**
(43) Date of publication of application: **12.04.2006**
(21) Application number: 05109157.7
(22) Date of filing: 04.10.2005
(51) Int. Cl.: G06Q 30/00, H04Q 7/22

(54) **System, arrangement and method of radio or television programme surveys**

(30) Priority: 05.10.2004 US 957598
(71) Applicant: JUTEL OY, 90570 Oulu (FI)
(72) Inventor: Kivelä, Jorma, 90150 Oulu (FI); Isokoski, Arto, 90520 Ouli (FI)
(74) Representative: Pykälä, Timo Tapani

(57) **Abstract**

Programme survey system, arrangement and method are disclosed. The system includes three interfaces: a first interface receiving programme information on a broadcast programme delivered to a receiver over a programme broadcasting channel, a second interface receiving programme-associated data information on broadcast-programme-associated data delivered to the receiver over a data channel, and a third interface receiving control information on the broadcast-programme-associated data signaled from the receiver over a return channel. The system also includes a processing unit creating associatively programme survey information from the programme information, the programme-associated data information, and the control information, the programme survey information including comparative information on various parts of the broadcast programme and broadcast-programme-associated data.

## Description

### Field

The invention relates to a programme survey system, an arrangement for a programme survey, and a method for performing a programme survey.

### Background

The listening habits of radio receiver users or, similarly, the viewing habits of television receiver users, may be examined with a programme survey. Traditionally, users have been interviewed afterwards for such surveys. There are several drawbacks with the interview technique. It is labor-intensive and hence expensive. The quality of interview results depends on how well the users remember what they have been listening or viewing. The interview results may require a relatively long processing time; hence the loop from feedback to corrective actions may be unnecessary long.

Prior art improvements for the interview technique include manual and automatic feedback systems. The habits of selected test users are followed with such systems. Typically, in such a system the test user has some kind of special feedback terminal at home. The feedback terminal may automatically track the received programme broadcasting channel and the reception time, for example. It may be possible for the user to rate the received programmes by making selections with the feedback terminal. Such systems are expensive to install and use, and the quality of the results depends on the statistically representative selection of test users.

### Brief description of the invention

The present invention seeks to provide an improved programme survey system, an improved arrangement for a programme survey, and an improved method for performing a programme survey.

According to an aspect of the present invention, there is provided a programme survey system, comprising: a first interface receiving programme information on a broadcast programme delivered to a receiver over a programme broadcasting channel; a second interface receiving programme-associated data information on broadcast-programme-associated data delivered to the receiver over a data channel; a third interface receiving control information on the broadcast-programme-associated data signaled from the receiver over a return channel; and a processing unit creating associatively programme survey information from the programme information, the programme-associated data information, and the control information, the programme survey information including comparative information on various parts of the broadcast programme and broadcast-programme-associated data.

According to an aspect of the present invention, there is provided an arrangement for a programme survey, comprising: means for receiving programme information on a broadcast programme delivered to a receiver over a programme broadcasting channel; means for receiving programme-associated data information on broadcast-programme-associated data delivered to the receiver over a data channel; means for receiving control information on the broadcast-programme-associated data signaled from the receiver over a return channel; and means for creating associatively programme survey information from the programme information, the programme-associated data information, and the control information, the programme survey information including comparative information on various parts of the broadcast programme and broadcast-programme-associated data.

According to an aspect of the present invention, there is provided a method for performing a programme survey, comprising: receiving programme information on a broadcast programme delivered to a receiver over a programme broadcasting channel; receiving programme-associated data information on broadcast-programme-associated data delivered to the receiver over a data channel; receiving control information on the broadcast-programme-associated data signaled from the receiver over a return channel; and creating associatively programme survey information from the programme information, the programme-associated data information, and the control information, the programme survey information including comparative information on various parts of the broadcast programme and broadcast-programme-associated data.

The invention provides several advantages. It makes use of modern broadcasting systems, which include not only the broadcast programme but also broadcast-programme-associated data. Programme surveys in such systems may be performed without the user having to participate in any special interviews. The user does not need any special equipment besides the normal receiver. Unlike traditional interviews, the programme surveys according to the invention do not have a long delay. The result of the programme survey is definitive:
it is the number of receivers receiving the broadcast-programme-associated data and/or the number of receivers responding by interactions or transactions.

### List of drawings

In the following, the invention will be described in greater detail with reference to the embodiments and the accompanying drawings, in which

Figure 1 is a simplified block diagram disclosing a program survey system interacting with a system for broadcasting a programme,

Figure 2 describes the use of various channels in the Visual Radio system,

Figure 3 illustrates passive use of a programme survey,

Figure 4 illustrates active use of a programme survey, and

Figure 5 is a flow chart illustrating a method for performing a programme survey.

### Description of embodiments

A programme survey system may be implemented in connection with a system for broadcasting a programme as described in the applicant's publication WO2004/051885A1 incorporated herein as a reference.

The broadcast programme may include a Visual Radio programme, an FM (Frequency Modulation) radio programme, an AM (Amplitude Modulation) radio programme, a DAB (Digital Audio Broadcasting) programme, a DRM (Digital Radio Mondiale) programme, an HDR (High-Definition Radio) programme a DVB (Digital Video Broadcasting) programme, an analogically broadcasted programme, and/or a digitally broadcasted programme. More information on Visual Radio may be found at address www.visualradio.com. In the following, embodiments will be described, in which the target of survey is a radio programme, but the embodiments are applicable to the above-mentioned other types of programme as well.

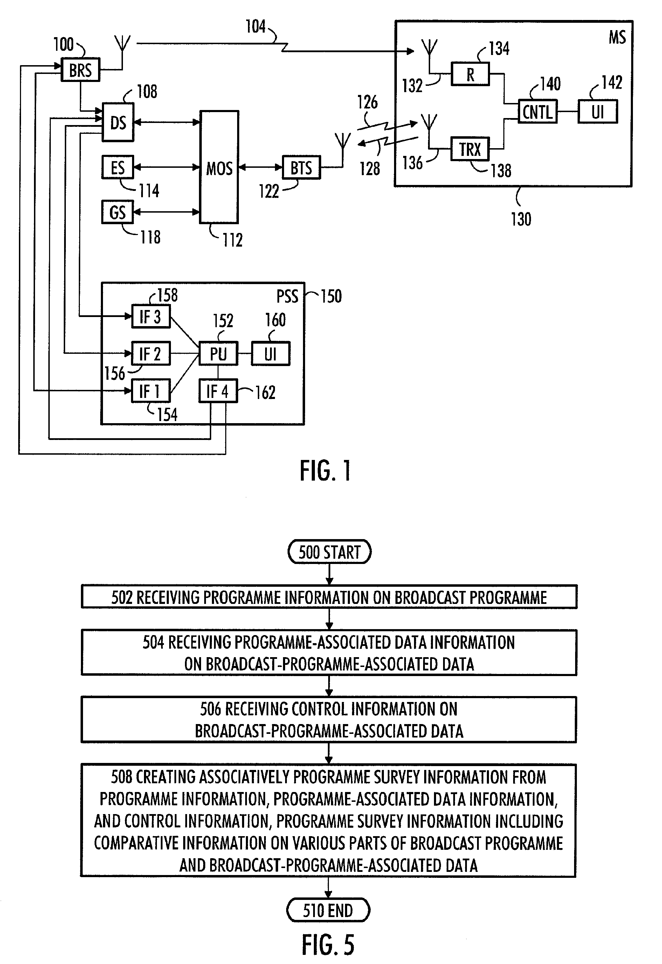

In Figure 1 is illustrated a broadcasting system 100, a data server 108, a mobility server 112, a purchasing server 114, a game server 118, a base station 122, a cellular radio network subscriber terminal 130, and a programme survey system 150.

By using the broadcasting system 100, a broadcast programme is broadcasted. The broadcasting system 100 may comprise both an audio library, in which the broadcast programmes are stored, and a production and broadcasting machinery of broadcast programmes. The audio library and the production and broadcasting machinery may be implemented by Jutel® Oy's RadioMan®, which is a system-level information system solution comprising all the necessary components for creating, scheduling, organizing, broadcasting, and archiving radio programmes.

The audio library may comprise several different devices, such as several different database servers and automatic CD (Compact Disc) players. The database servers may be implemented by SQL (Structured Query Language) databases with related database servers, for instance by the IBM® DB2® database software or Oracle® database software. The production and broadcasting machinery is a complex system comprising radio transmitters, antennas, automatic music and programme players, editors' workstations for programme design and mixing, an actual audio production studio with its various devices, etc.

The broadcast-programme-associated data may be processed in one or more physical entities: in the embodiment of Figure 1 in a data server 108 and a mobile server 112.

The data server 108 may comprise a processing unit for executing functions and a database for storing the broadcast-programme-associated data. The servers 108, 112 process synchronization information that defines the synchronization of the transmission of the broadcast-programme-associated data with the broadcasting of the programme. The broadcast-programme-associated data may be generated and processed in the broadcasting system 100 and transferred from there to the data server 108, or the broadcast-programme-associated data may be generated with a separate apparatus and transferred directly to the data server 108, or the broadcast-programme-associated data may be generated with an apparatus included in the data server 108.

The mobile server 112 may comprise a connection management block for managing data transmission connections established to subscriber terminals 130 transferring broadcast-programme-associated data, an authentication block for checking the access right of the subscriber terminal 130 to a service transmitting broadcast-programme-associated data to the subscriber terminal 130, and an application database from which the subscriber terminal 130 may, when necessary, download applications for processing a broadcast programme and broadcast-programme-associated data. For billing, the mobile server 112 may maintain a list of subscriber terminals 130 that receive broadcast-programme-associated data.

The broadcast programme may contain speech sections, musical pieces and advertisements, for instance. The broadcast-programme-associated data diversifies the radio broadcast programme by adding to the pure audio information also other type of information, such as visual information. The broadcast-programme-associated data may thus be for instance text, a still image or moving picture. The still image may for instance show an artist performing in the broadcast programme or a record cover of a broadcast musical piece. A single still image or a sequence of still images may form a comic strip. The moving picture may for instance be an animation or a video enlivening the musical piece of the broadcast programme. The broadcast-programme-associated data may also be sound. Depending on copyright agreements and the interests of the audience, the broadcast-programme-associated data may thus contain specific parts of the broadcast programme, for instance entire musical pieces, parts of musical pieces, ringing tones of a subscriber terminal or other additional information relating to musical pieces, logos, speech programmes, parts of speech programmes, news, sports news, jokes, sketches, newsletters, or elements of "talk radio" broadcasts, such as witty remarks of the host of the programme, or a separate report expanding the content of the broadcast programme. The broadcast-programme-associated data may also contain links to www (World Wide Web) pages. Such a www page may offer for sale an item advertised in the broadcast programme or broadcast-programme-associated data. The link may point to Apple Computer's iTunes service (www.apple.com/itunes), where music may be purchased, for example.

A cellular radio network receives from the server 108, 112 broadcast-programme-associated data and synchronization information. The cellular radio network comprises a base station 122 that transmits to the cellular radio network broadcast-programme-associated data at a specific frequency in such a manner that the transmission of the broadcast-programme-associated data is synchronized with the broadcast of the broadcast programme in accordance with the synchronization information. The cellular radio network may be GSM (Global System for Mobile Communications) that uses GPRS (General Packet Radio System) for implementing packet-switched data transmission to the subscriber terminal 130. WAP (Wireless Application Protocol) may also be used in data transmission. The embodiments are, however, not limited to this cellular radio network used as an example, but a person skilled in the art may also apply the teachings to other cellular radio networks that support data transmission to the subscriber terminal 130, such as UMTS (Universal Mobile Telecommunications System).

The subscriber terminal 130 of the cellular radio network comprises two different receivers for receiving radio waves: a radio receiver 134 with an antenna 132 for receiving a broadcast programme at a specific frequency 104 defined for the broadcasting system 100, and a cellular radio network transceiver 138 with an antenna 136 for receiving broadcast-programme-associated data at a specific frequency 126 defined for the cellular radio network. The cellular radio network transceiver 138 is for instance a prior-art transceiver of a mobile phone employing GSM/GPRS or UMTS, for instance. The radio receiver 134 implements an ordinary broadcast receiver, such as an FM, AM or DAB receiver. The subscriber terminal 130 also comprises parts implementing a user interface 142: a microphone and a loudspeaker to process sound, a display for displaying information, and an input device, which is typically a keyboard, for controlling the device and for entering information. The subscriber terminal 130 also comprises a processing unit 140 that controls and monitors the operation of the different parts of the device. The processing unit 140 contains application programs, for instance for processing the radio signals of the cellular radio network and for processing the radio signals of the broadcasting system 100.

A typical subscriber terminal 130 used in the system may comprise the following technologies: an FM radio, GPRS, a Symbian™ user interface, an environment suitable for running software made with the Java™ programming language, an MPEG (Moving Pictures Expert Group) player for displaying video pictures, a network browser for browsing HTML (Hypertext Markup Language) documents, an AMR (Advanced Multirate) player for reproducing sound, a memory for storing information, and APls (Application Programming Interfaces) for developing application software. The subscriber terminal 130 may have a specific user application with which the user may easily manage the reception of the broadcast programme and the broadcast-programme-associated data.

A return channel 128 may be established from the subscriber terminal 130 through the base station 122 to the server 108, 112. The cellular radio network transceiver 138 of the subscriber terminal 130 establishes the return channel 128 through the base station 122 to the server 108, 122, and the base station 122 receives the return channel 128. The information in the return channel may be processed in the mobile server 112, data server 108, or broadcasting system 100, depending on the application. The return channel 128 may include control information on the broadcast-programme-associated data signaled from the receiver 130.

To summarize, the broadcast programme is delivered on a programme broadcasting channel 104, the broadcast-programme-associated data is delivered on a data channel 126, and the control information on the broadcast-programme-associated data is signaled from the receiver over a return channel 128. The programme broadcasting channel refers to a channel where the programme is distributed unidirectionally to several receivers. The programme broadcasting channel for the broadcast programme may be a point-to-multipoint broadcast channel, as described above. However, in an embodiment, the programme broadcasting channel may also be a downlink radio channel of a cellular radio network. The data channel may be a downlink radio channel of a cellular radio network, as described, such as a downlink packet-switched radio channel of a cellular radio network. The return channel may be an uplink radio channel of a cellular radio network, as described, such as an uplink packet-switched radio channel of a cellular radio network. The control information is associated with controlling the delivery of the broadcast-programme-associated data. Therefore, the control information may include a broadcast-programme-associated data reception start command, a broadcast-programme-associated data reception end command, a broadcast-programme-associated data interaction reply command, and a broadcast-programme-associated data transaction reply command, for example.

The programme survey system 150 comprises three interfaces. A first interface 154 receives programme information on a broadcast programme delivered to the receiver 130 over a programme broadcasting channel 104. A second interface 156 receives programme-associated data information on broadcast-programme-associated data delivered to the receiver 130 over a data channel 126. A third interface 158 receives control information on the broadcast-programme-associated data signaled from the receiver 130 over a return channel 128. The programme survey system 150 also comprises a processing unit 152 creating associatively programme survey information from the programme information, the programme-associated data information, and the control information. The processing unit 152 may be implemented as a processor running specific software. Also other implementation techniques known in the art may be used, such as pure hardware solutions, one example being one or more application-specific integrated circuits (ASIC), or hybrid solutions employing a mix of hardware and software. Thus, the interfaces 154, 156, 158 may also be implemented with the techniques known in the art. Typical implementation techniques include various hardware and software interfaces, such as method calls, sub-routine calls, messages, communication ICs Integrated Circuit), or wirings between different ASIC blocks, for example. There are three logical communication interfaces 154, 156, 158, but as physical communication interfaces they may be more or less integrated, i.e. there may be one, two or three physical communication interfaces.

The programme survey information includes comparative information on various parts of the broadcast programme and broadcast-programme-associated data. The comparative information may be information on the popularity of the various parts. The comparative information may also be more complex information, such as information describing interrelationships. Information describing interrelationships may determine what kind of interactions or transactions succeed with a certain kind of music. The comparative information may determine how a particular interaction or transaction behaves in different contexts or how different types of interactions or transactions compare with each other.

The programme survey system 150 may also comprise a fourth interface 162. Through the fourth interface 162 programme survey information may be transferred to the broadcasting system 100 and/or data server 108. The programme survey system 150 may also comprise a user interface 160, with which the surveys may be controlled and programme survey information may be examined.

In an embodiment, the processing unit 152 estimates the preferences of a listening audience as part of the programme survey information. This embodiment is suitable for performing the programme survey on radio broadcasts, whether it is a traditional AM or FM radio or a more modern DAB or Visual Radio.

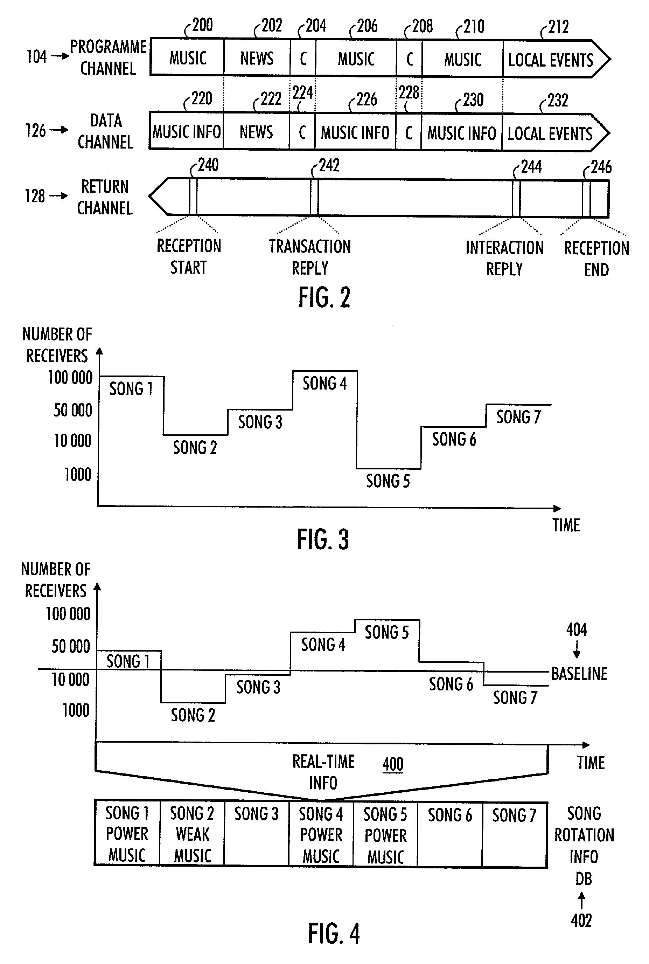

The use of the programme broadcasting channel, data channel and return channel in the Visual Radio system is illustrated in Figure 2. A radio programme comprises a sequence made of music 200, news 202, commercials 204, music 206, commercials 208, music 210 and information on local events 212 on the programme broadcasting channel 104. Correspondingly, background information 220 on music, news information 222, commercials 224, background information 226 on music, commercials 228, background information 230 on music and information 232 on local events are transmitted on the data channel 126. As illustrated in Figure 2, transmission on both the programme broadcasting channel 104 and the data channel 126 is synchronous. The actions of a listener can be seen on the return channel 128. The receiver has sent a broadcast-programme-associated data reception start command 240 after having listened to the music 200 for some time. Later, the receiver has reacted on commercials 204/224 by issuing a broadcast-programme-associated data transaction reply command 242, such as a purchase order for some advertised merchandise or service. During the local events 212/232, there has also been a programme section inviting feedback, such as a Gallup poll, and the receiver has issued a broadcast-programme-associated data interaction reply command 244 including an answer from the listener to the Gallup poll. Finally, the listener wishes to stop receiving the data channel 126 and issues with his/her subscriber terminal a broadcast-programme-associated data reception end command 246 on the return channel 128 for that purpose.

In an embodiment, the subscriber terminal 130 transmits by using the return channel 128 feedback information associated with the broadcast programme to the broadcasting system 100, and the broadcasting system 100 receives the feedback information associated with the broadcast programme from the subscriber terminal 130. Because the mobile server 112 maintains a list of the subscriber terminals 130 that receive broadcast-programme-associated data, the list may be transmitted together with the feedback information to the broadcasting system 100, which may have a specific session block with which the producer of the current broadcast programme, i.e. an "on air" radio programme, may implement polls, competitions and other events in which feedback from the recipient of the broadcast programme may be utilized. The producer of the broadcast programme thus sees for instance that approximately 100,000 listeners are receiving the broadcast-programme-associated data, and s/he may perform a quick Gallup poll on a highly topical issue in the form of one question, for example, and then sees through the user interface of the session block, almost in real time, how the results of the Gallup poll develop and what is the final result.

In an embodiment, the subscriber terminal 130 uses the return channel 128 to transfer to the server 108, 112 data related to a game to be played in the subscriber terminal 130. 'Game' refers to electronic video games. The server 108, 112 then receives the data related to the game from the subscriber terminal 130. Because the processing of game data may require high calculation power, especially when numerous players play the same game simultaneously, the functionality may be transferred, as shown in Figure 1, from the data server 108 to a specific game server 118.

For these two above-described embodiments, wherein the broadcast-programme-associated data comprises user interactions, the processing unit 152 may further rate the success of the user interactions as part of the programme survey information. It will then be easier to plan future interactions, as the programme survey system may suggest which interactions have been the most popular ones. The success may be determined between different types of user interactions, or between user interactions of the same type but with different contents. The type of the user interaction may be a quiz show or a Gallup poll, for example. The programme survey may show that a quiz show is generally more successful than the Gallup poll, for example. Or the programme survey may show that a Gallup poll concerning local events is in general more successful than a Gallup poll of international politics, for example.

In an embodiment, the subscriber terminal 130 makes a purchase by using the return channel 128, which purchase relates to a commercial presented in the broadcast programme and/or broadcast-programme-associated data. The server 108, 112 then receives purchase information from the subscriber terminal 130. Because the processing of confidential information is usually associated with purchasing, this functionality may be transferred, as shown in Figure 1, from the data server 108 to a specific purchasing server 114 designed for electronic commerce, which is then connected to the mobile server 112 over a secure and/or encrypted data transmission connection. For such an embodiment, wherein the broadcast-programme-associated data comprises user transactions, the processing unit 152 may further rate the success of the user transactions as part of the programme survey information. This embodiment enables very precise observation of the success rate of merchandise and services marketing. As an example, let us suppose that a commercial in the broadcast-programme-associated data included an offer for a discount coupon. This commercial was sent to 50,000 receivers, and 1,000 receivers ordered the discount coupon on the return channel. An instant success rate of this offer was (1,000 / 50, 000) x 100 % = 2 %. Such information gives valuable feedback to the advertisers on their campaigns and aids in planning future campaigns.

Distribution of functions between the system components 100, 108, 112, 114, 118 and 150 is partly a choice of design, depending on the size and needed processing capacity, for example. Therefore, some of the described components may be integrated: the data server 108 and/or the programme survey system 150 into the broadcasting system 100, for example. In such a scenario, the data channel 126 may be multiplexed in the programme broadcasting channel 104, for example.

Figure 3 illustrates passive use of the programme survey. Comparative information on various parts of the broadcast programme (songs 1 to 7) is shown in a simple diagram. It may be concluded that songs 1 and 4 are very popular, but song 5 has only a limited audience. The number of receivers is actually the number of receivers that had an order for the programme-associated data during the song. Such real-time surveying may enable dynamic planning of an ongoing programme.

In an embodiment, the processing unit 152 further rates items of a play-list of the broadcast programme based on the programme survey information, whereby the rotation of the items on the play-list is based on the information on the rated items of the play-list. This more active use of the programme survey is illustrated in Figure 4. In a comparative information diagram is illustrated the popularity of seven different songs, each having their own number of receivers. A baseline 404 has been set at 20,000 listeners. Songs 1, 4 and 5 are rated as 'Power Music', i.e. music that has a high popularity and can be played quite often. Song 2 is rated as 'Weak Music' and may not be played so often. Songs 3, 6 and 7 are over or under the baseline 404 within a certain margin and therefore do not receive any special rating. It is to be noted that there may also be other rules for the rating: in nighttime the baseline may need to be lower because then there are inherently fewer listeners, for example. Another rule for the rating may be that the item needs to be played a specified minimum amount of times before the rating is deemed reliable enough. The rating of the items in the play-list may be transferred as real-time information 400 to a song rotation information database 402 containing the ratings for each item.

In an embodiment, the processing unit 152 further forms a user profile based on the received control information of that user, whereby the user is targeted with a broadcast programme and broadcast-programme-associated data selected on the basis of the information on the user profile. One user may want to receive a video animating a news item as programme-associated data, another may want to receive textual background information on a news item as broadcast-programme-associated data; such configurations may be stored in the profile of each user as default likings.

Next, with reference to Figure 5, a method for performing a programme survey is described. The method may be implemented by a system of the type described in Figure 1, and the method may be modified as described in the description of the system of Figure 1, but it is apparent that other kind of broadcasting environments may also be suitable for implementing the method.

The execution of the method starts in 500.

In 502, programme information on a broadcast programme delivered to a receiver over a programme broadcasting channel is received.

In 504, programme-associated data information on broadcast-programme-associated data delivered to the receiver over a data channel is received.

In 506, control information on the broadcast-programme-associated data signaled from the receiver over a return channel is received.

In 508, programme survey information is created associatively from the programme information, the programme-associated data information, and the control information, the programme survey information including comparative information on various parts of the broadcast programme and broadcast-programme-associated data.

The execution of the method is continued as long as there is something to survey, in an extreme case around the clock from one day to another. The use of the method may also be periodic, for instance in such a manner that the programme survey is performed at a specified time of the day, or at a specified day of the week. Such automatic surveying is also easy to turn on and off at will. The execution of the method is stopped in 510.

Even though the invention is described above with reference to an example according to the accompanying drawings, it is clear that the invention is not restricted thereto but it can be modified in several ways within the scope of the appended claims.

## Claims

1. A programme survey system, comprising:
a first interface receiving programme information on a broadcast programme delivered to a receiver over a programme broadcasting channel;
a second interface receiving programme-associated data information on broadcast-programme-associated data delivered to the receiver over a data channel;
a third interface receiving control information on the broadcast-programme-associated data signaled from the receiver over a return channel; and
a processing unit creating associatively programme survey information from the programme information, the programme-associated data information, and the control information, the programme survey information including comparative information on various parts of the broadcast programme and broadcast-programme-associated data.

2. The programme survey system of claim 1, wherein the processing unit further estimates the preferences of a listening audience as part of the programme survey information.

3. The programme survey system of claim 1, wherein the broadcast-programme-associated data comprises user interactions, and the processing unit further rates the success of the user interactions as part of the programme survey information.

4. The programme survey system of claim 1, wherein the broadcast-programme-associated data comprises user transactions, and the processing unit further rates the success of the user transactions as part of the programme survey information.

5. The programme survey system of claim 1, wherein the processing unit further rates items of a play-list of the broadcast programme based on the programme survey information, whereby the rotation of the items in the play-list is based on the information on the rated items of the play-list.

6. The programme survey system of claim 1, wherein the processing unit further forms a user profile based on the received control information of that user, whereby the user is targeted with broadcast programme and broadcast-programme-associated data selected on the basis of the information on the user profile.

7. The programme survey system of claim 1, wherein the control information comprises at least one of a broadcast-programme-associated data reception start command, a broadcast-programme-associated data reception end command, a broadcast-programme-associated data interaction reply command, and a broadcast-programme-associated data transaction reply command.

8. The programme survey system of claim 1, wherein the programme broadcasting channel comprises a point-to-multipoint broadcast channel.

9. The programme survey system of claim 1, wherein the programme broadcasting channel comprises a downlink radio channel of a cellular radio network.

10. The programme survey system of claim 1, wherein the data channel comprises a downlink radio channel of a cellular radio network.

11. The programme survey system of claim 1, wherein the data channel comprises a downlink packet-switched radio channel of a cellular radio network.

12. The programme survey system of claim 1, wherein the return channel comprises an uplink radio channel of a cellular radio network.

13. The programme survey system of claim 1, wherein the return channel comprises an uplink packet-switched radio channel of a cellular radio network.

14. The programme survey system of claim 1, wherein the broadcast programme comprises at least one of a Visual Radio programme, an FM radio programme, an AM radio programme, a DAB programme, a DRM programme, an HDR programme, a DVB programme, an analogically broadcasted programme, and a digitally broadcasted programme.

15. An arrangement for a programme survey, comprising:
means for receiving programme information on a broadcast programme delivered to a receiver over a programme broadcasting channel;
means for receiving programme-associated data information on broadcast-programme-associated data delivered to the receiver over a data channel;
means for receiving control information on the broadcast-programme-associated data signaled from the receiver over a return channel; and
means for creating associatively programme survey information from the programme information, the programme-associated data information, and the control information, the programme survey information including comparative information on various parts of the broadcast programme and broadcast-programme-associated data.

16. A method for performing a programme survey, comprising:
receiving programme information on a broadcast programme delivered to a receiver over a programme broadcasting channel;
receiving programme-associated data information on broadcast-programme-associated data delivered to the receiver over a data channel;
receiving control information on the broadcast-programme-associated data signaled from the receiver over a return channel; and
creating associatively programme survey information from the programme information, the programme-associated data information, and the control information, the programme survey information including comparative information on various parts of the broadcast programme and broadcast-programme-associated data.
